# EUROPÄISCHE PATENTSCHRIFT

(11) **EP 0 982 896 B1**
(45) Veröffentlichungstag und Bekanntmachung des Hinweises auf die Patenterteilung: **20.02.2008**
(21) Anmeldenummer: 99115773.6
(22) Anmeldetag: 10.08.1999
(51) Int. Cl.: H04L 9/32

(54) **Verfahren und Vorrichtung zum Nachweis einer digitalen Signatur einer elektronischen Datei**
Method and apparatus for proving existence of a digital signature of a digital file
Procédé et dispositif pour démontrer la présence d'une signature numérique d'un fichier électronique

(30) Priorität: 25.08.1998 DE 19838605
(43) Veröffentlichungstag der Anmeldung: 01.03.2000
(60) Teilanmeldung: 04003322.7
(73) Patentinhaber: SIEMENS AKTIENGESELLSCHAFT, 80333 München (DE)
(72) Erfinder: Hoffmann, Gerhard, 81547 München (DE); Lukas, Klaus, 81793 München (DE); Hartmann, Peter, Prof., 82178 Puchheim (DE)

(56) Entgegenhaltungen:
- EP-A- 0 884 869
- WO-A-97/12460
- US-A- 5 208 858
- US-A- 5 606 609

## Beschreibung

Die Erfindung betrifft den Nachweis eines digitalen Signierens einer elektronischen Datei.

Ein solches Verfahren ist aus [1] bekannt.

Bei diesem Verfahren wird eine elektronische Datei, die einem Benutzer dargestellt wird, unter Verwendung eines asymmetrischen kryptographischen Verfahrens digital signiert.

Unter einer elektronischen Datei ist jede Form einer Datei, die in digitaler Form vorliegt, zu verstehen, beispielsweise
- eine Datei, die Textinformation enthält,
- eine Datei, die digitale Graphikinformation enthält,
- eine Datei, die digitale Audiodaten enthält,
- eine Datei, die digitale Videodaten enthält, oder
- eine Datei, die mehrere der oben beschriebenen Datenarten gemeinsam in einer Datei enthält.

Die digitale Signatur erfolgt unter Verwendung eines asymmetrischen kryptographischen Verfahrens, dem sogenannten RSA-Verfahren. Dabei wird mit einem geheimen Schlüssel, der lediglich dem Benutzer bekannt ist, die Datei verschlüsselt. Es ist unter Verwendung eines öffentlichen Schlüssels, der zu dem geheimen Schlüssel korrespondiert, möglich, die verschlüsselte Datei zu entschlüsseln, wodurch der Nachweis erbracht worden ist, daß die Datei von dem Besitzer des geheimen Schlüssels verschlüsselt worden ist.

In einer Variante ist es bekannt, nicht die Datei selbst mit dem geheimen Schlüssel zu signieren, sondern über die Datei einen Hashwert zu bilden unter Verwendung einer Hash-Funktion, und den gebildeten Hashwert mit dem geheimen Schlüssel zu verschlüsseln und mit dem korrespondierenden öffentlichen Schlüssel zu entschlüsseln und unter Verwendung derselben Hash-Funktion die digitale Signatur zu verifizieren.

Eine Übersicht über Hash-Funktionen ist in [2] zu finden. Unter einer Hash-Funktion ist eine Funktion zu verstehen, bei der es nicht möglich ist, zu einem gegebenen Funktionswert einen passenden Eingangswert zu berechnen. Ferner wird einer beliebig langen Eingangszeichenfolge eine Ausgangszeichenfolge fester Länge zugeordnet. Des weiteren können für die Hash-Funktion zusätzliche Eigenschaften gefordert werden. Eine solche zusätzliche Eigenschaft ist Kollisionsfreiheit, d.h. es darf nicht möglich sein, zwei verschiedene Eingangszeichenfolgen zu finden, die dieselbe Ausgangszeichenfolge ergeben.

Beispiele einer Hash-Funktion sind das Verfahren gemäß dem MD-2-Standard, das Verfahren gemäß dem MD-5-Standard, das Verfahren SHA-1, der Data Encryption Standard (DES), welcher ohne Verwendung eines Schlüssels durchgeführt wird, oder auch jede andere beliebige Hash-Funktion.

Eine Übersicht über asymmetrische kryptographische Verfahren ist in [2] zu finden.

Ein Standardverfahren zum elektronischen Signieren von Dateien ist in [3] beschrieben, bei dem ein Verfahren und System zur Bildung einer Nachweisgröße, die einen Nachweis eines digitalen Signierens einer elektronischen Datei, die in einem Datenformat vorliegt, ermöglicht, bei dem eine Dateisignatur von der Datei in dem Dateiformat gebildet wird und die Nachweisgröße die Datei und die Dateisignatur umfasst.

Mit dem aus [1] bekannten Verfahren ist es zwar möglich zu gewährleisten, daß die elektronische Datei tatsächlich von dem Besitzer des geheimen Schlüssels signiert worden ist, jedoch ist durch dieses Verfahren nicht unbedingt gewährleistet, daß der Benutzer tatsächlich das signiert hat, was ihm beispielsweise über ein Datendarstellungsgerät dargestellt worden ist. Somit besteht die Möglichkeit, daß einem Benutzer Information nicht dargestellt worden ist, aber dennoch in der elektronischen Datei enthalten ist. Wenn der Benutzer nun die gesamte elektronische Datei signiert, so unterschreibt der Benutzer damit auch einen Teil der elektronischen Datei, der ihm gar nicht zur Kenntnis gebracht worden ist.

Somit genügt das aus [1] bekannte Verfahren keineswegs den Sicherheitsanforderungen, die im Bereich des Electronic Commerce oder allgemein einer elektronischen Tätigkeit in einem Rechnernetz, beispielsweise dem Internet, gestellt werden.

Es ist unbedingt erforderlich, daß für den Fall, wenn eine digitale Unterschrift unter eine elektronische Datei für den Unterzeichner bindend sein soll, gewährleistet ist, daß der Benutzer tatsächlich das signiert hat, was dem Benutzer auf dem Datendarstellungsgerät dargestellt worden ist. Es muß somit zu einem beliebigen Zeitpunkt nachweisbar sein, welche Darstellung dem Unterzeichner zum Zeitpunkt der Signaturerstellung vorgelegen hat. Das Originaldokument, welches von dem Benutzer unterzeichnet worden ist, soll dabei maschinell durch den Rechner weiter verarbeitbar bleiben.

Somit liegt der Erfindung das Problem zugrunde, eine Nachweisgröße zu bilden, die einen Nachweis eines digitalen Signierens einer elektronischen Datei sowie den Nachweis, daß eine elektronische Datei digital signiert worden ist, unfälschbar ermöglicht.

Das Problem wird durch die Verfahren mit den Merkmalen gemäß den unabhängigen Patentansprüchen sowie mit den Vorrichtungen mit den Merkmalen gemäß den unabhängigen Patentansprüchen gelöst.

Ein Verfahren zur Bildung einer Nachweisgröße, die einen Nachweis eines digitalen Signierens einer elektronischen Datei, die in einem ersten Dateiformat vorliegt, ermöglicht, umfaßt folgende Schritte, die mit einem Rechner durchgeführt werden:
a) die Datei wird in ein zweites Dateiformat transformiert,
b) eine erste Dateisignatur wird abhängig von der Datei in dem ersten Dateiformat gebildet,
c) eine erste Transformationssignatur wird abhängig von der Datei in dem zweiten Dateiformat gebildet, und
d) die Nachweisgröße umfaßt die Datei in dem ersten Dateiformat, die erste Dateisignatur sowie die erste Transformationssignatur.

Ein weiteres Verfahren zur Bildung einer Nachweisgröße, die einen Nachweis eines digitalen Signierens einer elektronischen Datei, die in einem ersten Dateiformat vorliegt, ermöglicht, durch einen Rechner, umfaßt folgende Schritte:
a) das erste Dateiformat ist derart eingerichtet, daß gewährleistet ist, daß in dem ersten Dateiformat zu signierende Daten vollständig dargestellt werden,
b) eine erste Dateisignatur wird abhängig von der Datei in dem ersten Dateiformat gebildet,
c) eine erste Transformationssignatur wird abhängig von einer Transformationsgröße, die das die Darstellung durchführende Programm charakterisiert, gebildet, und
d) die Nachweisgröße umfaßt die Datei in dem ersten Dateiformat, die erste Dateisignatur sowie die erste Transformationssignatur.

Ein Verfahren zum Nachweis, daß eine elektronische Datei, die in einem ersten Dateiformat vorliegt, digital signiert worden ist, umfaßt folgende Schritte:
a) der Nachweis erfolgt ausgehend von einer Nachweisgröße, die die Datei in dem ersten Dateiformat, eine erste Dateisignatur sowie eine erste Transformationssignatur umfaßt, wobei
   - die erste Dateisignatur abhängig von der Datei in dem ersten Dateiformat gebildet worden ist,
   - die erste Transformationssignatur abhängig von der Datei in dem zweiten Dateiformat gebildet worden ist, in welches die Datei transformiert worden ist,
b) unter Verwendung der Datei in dem ersten Dateiformat wird die erste Dateisignatur verifiziert,
c) die Datei in dem ersten Dateiformat wird in ein zweites Dateiformat transformiert,
d) unter Verwendung der Datei in dem zweiten Dateiformat wird die erste Transformationssignatur verifiziert,
e) bei negativer Verifikation wird ein Signal generiert, mit dem angezeigt wird, daß die Datei in dem ersten Dateiformat nicht digital signiert worden ist oder modifiziert worden ist,
f) bei positiver Verifikation der ersten Dateisignatur und der ersten Transformationssignatur ist der Nachweis erbracht worden, daß die Datei in dem ersten Dateiformat digital signiert worden ist.

Ein weiteres Verfahren zum Nachweis, daß eine elektronische Datei, die in einem ersten Dateiformat vorliegt, digital signiert worden ist, umfaßt folgende Schritte
a) der Nachweis erfolgt ausgehend von einer Nachweisgröße, die die Datei in dem ersten Dateiformat, eine erste Dateisignatur sowie eine erste Transformationssignatur umfaßt, wobei
   - die erste Dateisignatur abhängig von der Datei in dem ersten Dateiformat gebildet worden ist,
   - die erste Transformationssignatur abhängig von einer Transformationsgröße, die das die Darstellung durchführende Programm charakterisiert, gebildet wird,
b) unter Verwendung der Datei in dem ersten Dateiformat wird die erste Dateisignatur verifiziert,
c) unter Verwendung der Datei in dem zweiten Dateiformat wird die erste Transformationssignatur verifiziert,
d) bei negativer Verifikation wird ein Signal generiert, mit dem angezeigt wird, daß die Datei in dem ersten Dateiformat nicht digital signiert worden ist oder modifiziert worden ist, und
e) bei positiver Verifikation der ersten Dateisignatur und der ersten Transformationssignatur ist der Nachweis erbracht worden, daß die Datei in dem ersten Dateiformat digital signiert worden ist.

Eine Vorrichtung zur Bildung einer Nachweisgröße, die einen Nachweis eines digitalen Signierens einer elektronischen Datei, die in einem ersten Dateiformat vorliegt, ermöglicht, umfaßt einen Prozessor, der derart eingerichtet ist, daß folgende Schritte durchführbar sind:
a) die Datei wird in ein zweites Dateiformat transformiert,
b) eine erste Dateisignatur wird abhängig von der Datei in dem ersten Dateiformat gebildet,
c) eine erste Transformationssignatur wird abhängig von der Datei in dem zweiten Dateiformat gebildet, und
d) die Nachweisgröße umfaßt die Datei in dem ersten Dateiformat, die erste Dateisignatur sowie die erste Transformationssignatur.

Eine weitere Vorrichtung zur Bildung einer Nachweisgröße, die einen Nachweis eines digitalen Signierens einer elektronischen Datei, die in einem ersten Dateiformat vorliegt, ermöglicht,
enthält einen Prozessor, der derart eingerichtet ist, daß folgende Schritte durchführbar sind:
a) das erste Dateiformat ist derart eingerichtet, daß gewährleistet ist, daß in dem ersten Dateiformat zu signierende Daten vollständig dargestellt werden,
b) eine erste Dateisignatur wird abhängig von der Datei in dem ersten Dateiformat gebildet,
c) eine erste Transformationssignatur wird abhängig von einer Transformationsgröße, die das die Darstellung durchführende Programm charakterisiert, gebildet, und
d) die Nachweisgröße umfaßt die Datei in dem ersten Dateiformat, die erste Dateisignatur sowie die erste Transformationssignatur.

Eine Vorrichtung zum Nachweis, daß eine elektronische Datei, die in einem ersten Dateiformat vorliegt, digital signiert worden ist, umfaßt einen Prozessor, der derart eingerichtet ist, daß folgende Schritte durchführbar sind:
a) Der Nachweis erfolgt ausgehend von einer Nachweisgröße, die die Datei in dem ersten Dateiformat, eine erste Dateisignatur sowie eine erste Transformationssignatur umfaßt, wobei
   - die erste Dateisignatur abhängig von der Datei in dem ersten Dateiformat gebildet worden ist,
   - die erste Transformationssignatur abhängig von der Datei in dem zweiten Dateiformat gebildet worden ist, in welches die Datei transformiert worden ist,
b) unter Verwendung der Datei in dem ersten Dateiformat wird die erste Dateisignatur verifiziert,
c) die Datei in dem ersten Dateiformat wird in ein zweites Dateiformat transformiert,
d) unter Verwendung der Datei in dem zweiten Dateiformat wird die erste Transformationssignatur verifiziert,
e) bei negativer Verifikation wird ein Signal generiert, mit dem angezeigt wird, daß die Datei in dem ersten Dateiformat nicht digital signiert worden ist oder modifiziert worden ist, und
f) bei positiver Verifikation der ersten Dateisignatur und der ersten Transformationssignatur ist der Nachweis erbracht worden, daß die Datei in dem ersten Dateiformat digital signiert worden ist.

Eine weitere Vorrichtung zum Nachweis, daß eine elektronische Datei, die in einem ersten Dateiformat vorliegt, digital signiert worden ist,
enthält einen Prozessor, der derart eingerichtet ist, daß folgende Schritte durchführbar sind:
a) der Nachweis erfolgt ausgehend von einer Nachweisgröße, die die Datei in dem ersten Dateiformat, eine erste Dateisignatur sowie eine erste Transformationssignatur umfaßt, wobei
   - die erste Dateisignatur abhängig von der Datei in dem ersten Dateiformat gebildet worden ist,
   - die erste Transformationssignatur abhängig von einer Transformationsgröße, die das die Darstellung durchführende Programm charakterisiert, gebildet wird,
b) unter Verwendung der Datei in dem ersten Dateiformat wird die erste Dateisignatur verifiziert,
c) unter Verwendung der Datei in dem zweiten Dateiformat wird die erste Transformationssignatur verifiziert,
d) bei negativer Verifikation wird ein Signal generiert, mit dem angezeigt wird, daß die Datei in dem ersten Dateiformat nicht digital signiert worden ist oder modifiziert worden ist, und
e) bei positiver Verifikation der ersten Dateisignatur und der ersten Transformationssignatur ist der Nachweis erbracht worden, daß die Datei in dem ersten Dateiformat digital signiert worden ist.

Durch die Erfindung wird es möglich, zu gewährleisten, daß der Benutzer tatsächlich die elektronische Datei signiert hat, die ihm am Datensichtgerät dargestellt worden ist.

Dies erfolgt sogar unter erheblicher Einsparung benötigten Speicherplatzbedarfs bzw. benötigter Datenübertragungsrate bei der Speicherung bzw. der Übertragung der Nachweisgröße.

Unter dem ersten Dateiformat ist in diesem Zusammenhang ein Dateiformat zu verstehen, bei dem nicht ohne weiteres gewährleistet werden kann, daß die dem Benutzer in dem ersten Dateiformat dargestellte Information tatsächlich die gesamte, in der Datei enthaltene Information darstellt. Dies bedeutet, daß es bei einer Datei in dem ersten Dateiformat grundsätzlich möglich ist, Information in der Datei vor dem Benutzer zu "verstecken", um somit dem Benutzer dazu zu bringen, Information zu signieren, von der er niemals Kenntnis erlangt hat. Ein Beispiel eines solchen Dateiformats ist in einer üblichen Microsoft-Winword-Datei oder auch einer Microsoft-Excel-Datei zu verstehen.

Durch die Festlegung von Charakteristika (der Konfigurationen) des zur Darstellung der Daten verwendeten Programms kann auch bei Daten im ersten Dateiformat gewährleistet werden, daß dem Benutzer tatsächlich die gesamte in der Datei enthaltene Information dargestellt wird. Ein Beispiel für ein solches Programm ist Microsoft-Winword, bei dem in einer Initialisierungs-Datei oder in einem Datenbank-Eintrag (registry) die Anzeigeoptionen eindeutig festgelegt werden können.

Unter dem zweiten Dateiformat ist ein Dateiformat zu verstehen, bei dem es nicht ohne weiteres für den Benutzer oder einen Dritten möglich ist, weitere Information der Datei hinzuzufügen, die dem Benutzer nicht dargestellt wird. Dies bedeutet, daß die gesamte Information, die in der Datei in dem zweiten Dateiformat enthalten ist, auch dem Benutzer dargestellt wird. Beispiele für Dateien in dem zweiten Dateiformat sind PDF-Dateien, die dem Benutzer auf einem Bildschirm dargestellt werden, oder auch Postscript-Dateien, die einem Benutzer direkt auf einem Drucker ausgedruckt werden können.

Bevorzugte Weiterbildungen der Erfindung ergeben sich aus den abhängigen Ansprüchen.

Es ist in einer Weiterbildung vorgesehen, daß die erste Dateisignatur und/oder die erste Transformationssignatur derart gebildet wird, daß unter Verwendung einer Hash-Funktion ein erster Hashwert der Datei in dem ersten Dateiformat gebildet wird bzw. ein erster Hashwert der Datei in dem zweiten Dateiformat gebildet wird, und der erste Hashwert der Datei einem Verfahren zur Bildung einer digitalen Signatur unterzogen wird. Durch diese Weiterbildung wird die erforderliche Datenrate zur Übertragung der Nachweisgröße sowie der benötigte Speicherbedarf zur Speicherung der Nachweisgröße weiter reduziert.

Bevorzugt basiert das Verfahren zur Bildung der digitalen Signaturen auf dem Prinzip der asymmetrischen Kryptographie.

Ferner ist es in einer Weiterbildung vorteilhaft, daß bei der Bildung der ersten Transformationsssignatur weitere oder andere Größen, die einen die Signaturen ausführenden Benutzer, das die Darstellung der Daten und/oder die Transformation durchführende Programm oder den die Darstellung der Daten und/oder die Transformation durchführenden Rechner charakterisieren, berücksichtigt werden. Auf diese Weise wird das erreichbare Sicherheitsniveau bei der Signierung weiter erhöht.

Ausführungsbeispiele der Erfindung sind in den Figuren dargestellt und werden im weiteren näher erläutert.

Es zeigen
- Figur 1: eine schematische Darstellung eines ersten Ausführungsbeispiels;
- Figur 2: eine schematische Darstellung eines zweiten Ausführungsbeispiels.

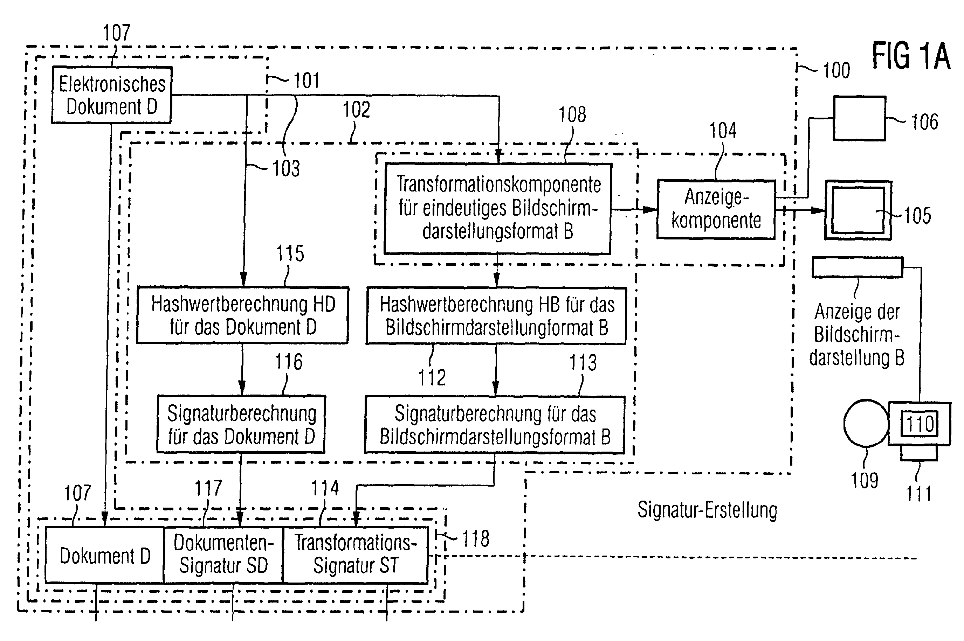

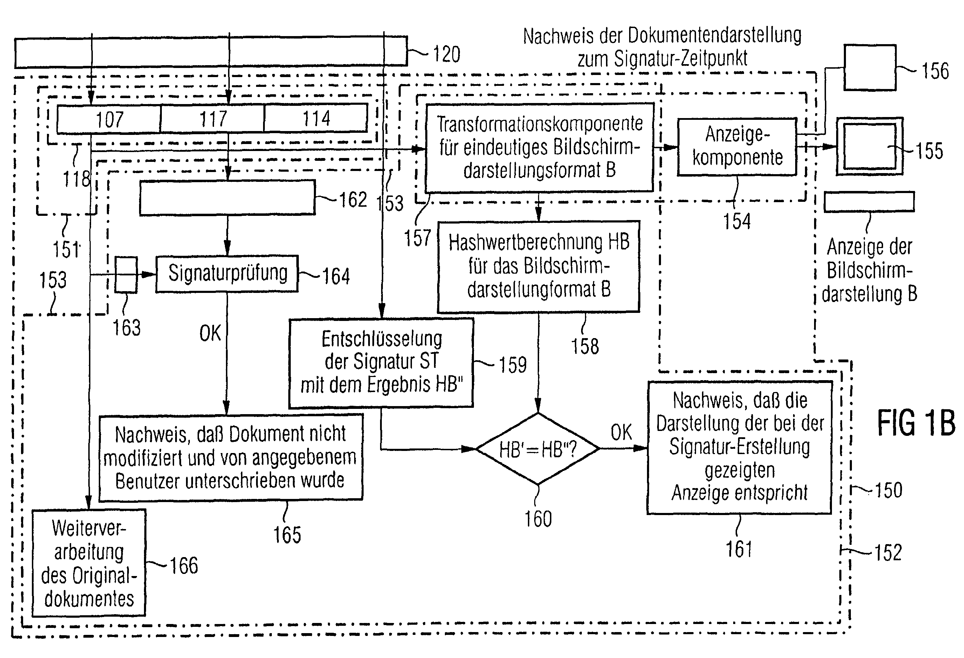

**Fig.1** zeigt einen ersten Rechner 100, der einen Speicher 101 sowie einen Prozessor 102 umfaßt, der über einen Bus 103 mit dem Speicher 101 verbunden ist.

Der Prozessor 102 ist derart eingerichtet, daß die im weiteren beschriebenen Verfahrensschritte durchführbar sind.

Der erste Rechner 100 weist ferner eine mit dem Bus 103 verbundene Anzeigekomponente 104 auf, über die der erste Rechner 100 mit Peripherieeinheiten anschließbar ist. Der erste Rechner 100 ist mit einem Bildschirm 105 sowie mit einem Drucker 106 als Datenausgabegeräte verbunden.

Von dem Prozessor 102 wird die elektronische Datei 107, die in einem ersten Dateiformat vorliegt, in einem ersten Schritt (Schritt 108) in ein zweites Dateiformat transformiert, wobei für die Datei in dem zweiten Dateiformat sichergestellt ist, daß eine Datei, die in dem zweiten Dateiformat einem Benutzer dargestellt wird, eindeutig die gesamte in der Datei enthaltene Information dem Benutzer auch darstellt.

Über die Anzeigekomponente 104 wird die Datei in dem zweiten Dateiformat einem Benutzer 109 dargestellt. Will der Benutzer die Datei digital unterschreiben, d.h. digital signieren, so macht der Benutzer 109 dem ersten Rechner 100 den dem Benutzer 109 zugeordneten geheimen Schlüssel verfügbar.

Dies erfolgt beispielsweise über eine Chipkarte 110, die einem Chipkartenleser 111 an den ersten Rechner 100 angeschlossen ist. Die geheime Schlüsselinformation kann jedoch auch in dem ersten Rechner 100 schon gespeichert sein.

Unter Verwendung einer Hash-Funktion wird in einem zweiten Schritt (Schritt 112) ein erster Hashwert der Datei in dem zweiten Dateiformat gebildet. Der erste Hashwert wird unter Verwendung eines Verfahrens zur Erstellung einer digitalen Signatur digital signiert (Schritt 113), womit eine Transformationssignatur 114 gebildet wird.

Die elektronische Datei 107 in dem ersten Dateiformat wird ebenfalls unter Verwendung einer Hash-Funktion einer Hashwertbildung unterzogen (Schritt 115). Der gebildete Hashwert über die Datei 111 in dem ersten Dateiformat wird digital signiert (Schritt 116), womit eine Dokumentensignatur 117 gebildet wird.

Eine Nachweisgröße 118 enthält die elektronische Datei 107 in dem ersten Dateiformat sowie die durch die Signaturbildung über den Hashwert der elektronischen Datei 107 in dem ersten Dateiformat gebildete Dokumentensignatur 117 sowie die Transformationssignatur 114, die der gebildeten Signatur über den Hashwert der elektronischen Datei in dem zweiten Dateiformat entspricht.

Die Nachweisgröße 118 wird in dem Speicher 101 des ersten Rechners 100 gespeichert.

Die Nachweisgröße 118 wird von dem ersten Rechner 100 zu einem zweiten Rechner 150 über ein Kommunikationsnetz 120 übertragen.

Der zweite Rechner 150 weist ebenfalls einen Speicher 151, einen Prozessor 152, der über einen Bus 153 mit dem Speicher verbunden ist, auf. Ferner ist eine Eingangs-/Ausgangsschnittstelle 154 vorgesehen, die ebenfalls mit dem Bus 103 verbunden ist. Über die Eingangs-/ Ausgangsschnittstelle 154 ist der zweite Rechner 150 mit einem Bildschirm 155 und einem Drucker 156 verbunden. Die Nachweisgröße 118 wird in dem Speicher 151 des zweiten Rechners 150 gespeichert.

Ein Nachweis, daß der Benutzer tatsächlich die elektronische Datei 107 in dem ersten Dateiformat unterschrieben hat, und keine versteckte Information in der elektronischen Datei 107 in dem ersten Dateiformat enthalten ist, erfolgt gemäß folgender Vorgehensweise.

Es wird für die elektronische Datei 107 in dem ersten Dateiformat wiederum eine Transformation in das zweite Dateiformat durchgeführt (Schritt 157). Über die Datei in dem zweiten Dateiformat wird ein Hashwert unter Verwendung einer Hashfunktion gebildet (Schritt 158).

In einem weiteren Schritt wird die Transformationssignatur 115 entschlüsselt (Schritt 159).

Da die digitale Signatur gemäß dem RSA-Verfahren erfolgt, wurde die Transformationssignatur 114 derart gebildet, daß der Hashwert, der über die Datei in dem zweiten Dateiformat mit dem geheimen Schlüssel des Benutzers 108 verschlüsselt worden ist.

Die Entschlüsselung der Transformationssignatur 115 erfolgt nun mit dem zu dem geheimen Schlüssel korrespondierenden öffentlichen Schlüssel.

Das Ergebnis der Entschlüsselung ist der Hashwert über die Datei in dem zweiten Dateiformat, wie er in dem ersten Rechner 100 gebildet worden ist (vgl. Schritt 109).

In einem Vergleichsschritt (Schritt 160) wird überprüft, ob die entschlüsselte Transformationssignatur 114 mit dem in dem zweiten Rechner 150 gebildeten Hashwert über die Datei in dem zweiten Dateiformat (Schritt 158) übereinstimmt.

Ist dies der Fall, so ist durch diesen Verifikationsschritt nachgewiesen, daß die Darstellung der bei der SignaturErstellung gezeigten, dem Benutzer 108 dargestellten Anzeige und somit dem Inhalt der elektronischen Datei 107, entspricht (Schritt 161).

Weiterhin wird durch Entschlüsselung der Dokumentensignatur 117, die gemäß dem RSA-Verfahren durch Verschlüsselung des Hashwerts der elektronischen Datei 107 in dem ersten Dateiformat mit dem geheimen Schlüssel des Benutzers 108 gebildet worden ist, mit dem zu dem geheimen Schlüssel korrespondierenden öffentlichen Schlüssel entschlüsselt, wodurch ein empfangener Hashwert über die elektronische Datei 107 in dem ersten Dateiformat gebildet wird (Schritt 162).

Ferner wird in einem weiteren Schritt (Schritt 163) über die elektronische Datei 107 in dem ersten Dateiformat ein Hashwert gebildet.

In einem weiteren Überprüfungsschritt (Schritt 164) werden die Hashwerte miteinander verglichen und bei Gleichheit der Hashwerte ist durch diesen Verifikationsschritt nachgewiesen, daß die elektronische Datei 107 in dem ersten Dateiformat nicht modifiziert wurde, seitdem sie von dem Benutzer 108 unterschrieben worden ist (Schritt 165).

Ergeben beide Verifikationsschritte (Schritte 160 und 164) ein positives Ergebnis, so ist damit nachgewiesen, daß der Benutzer 108 tatsächlich die elektronische Datei 107 in dem ersten Dateiformat mit seinem gesamten Inhalt dargestellt bekommen hat und er somit auch den gesamten Inhalt der elektronischen Datei 107 in dem ersten Dateiformat unterschrieben hat. Somit kann die elektronische Datei 107 in dem ersten Dateiformat weiterverarbeitet werden (Schritt 166).

Bei negativer Verifikation wird ein Signal generiert, mit dem angezeigt wird, daß die Datei in dem ersten Dateiformat entweder nicht digital signiert worden ist oder modifiziert worden ist (nicht dargestellt).

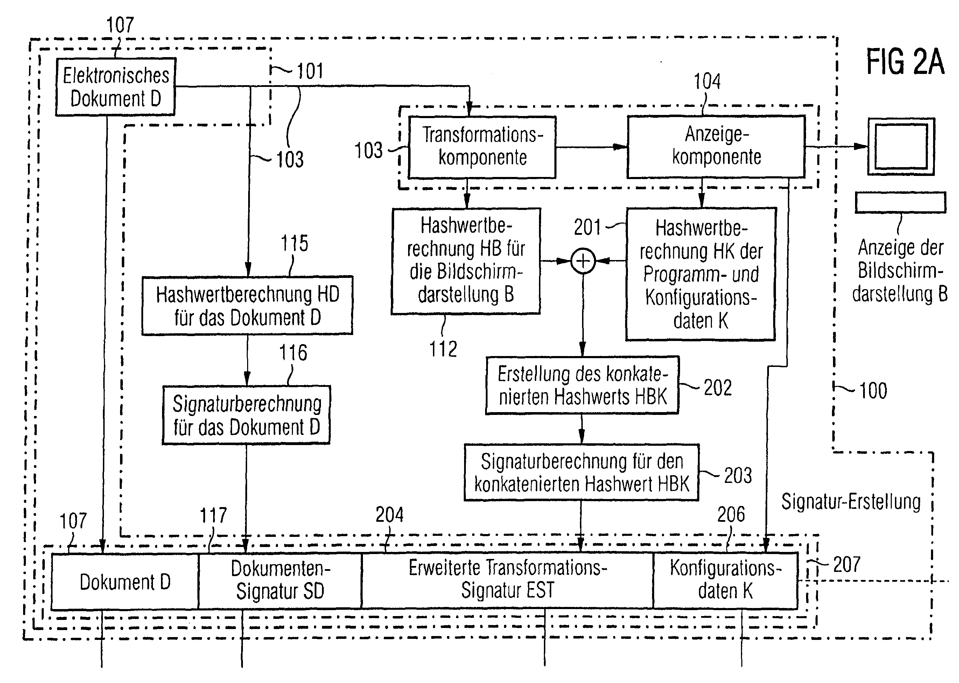

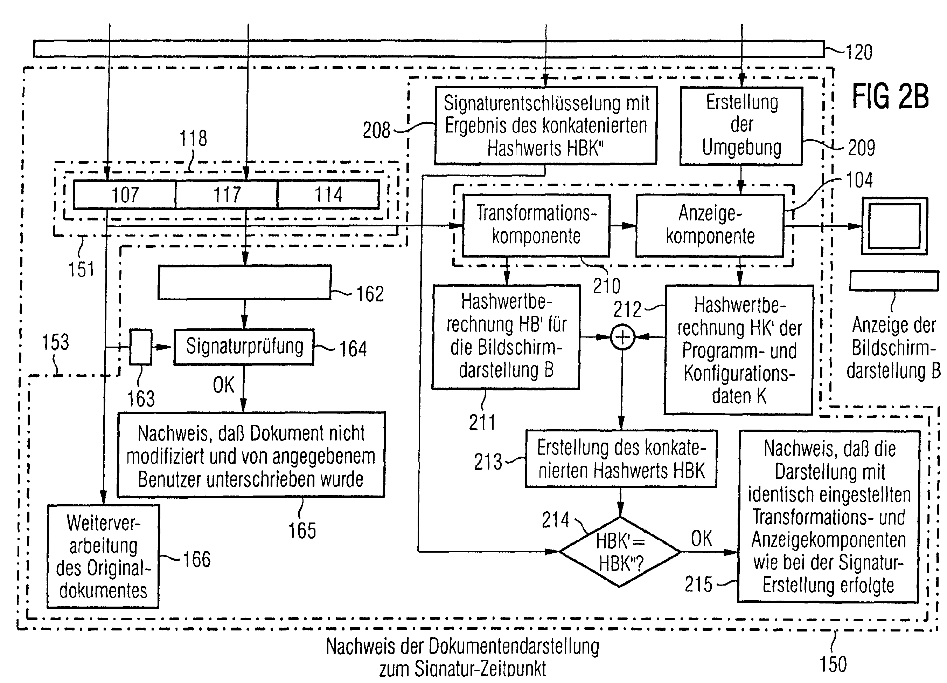

**Fig.2** zeigt eine Erweiterung des in Figur 1 dargestellten Verfahrens im Rahmen eines zweiten Ausführungsbeispiels.

Zur einfacheren Darstellung sind die Komponenten des in **Fig.2** dargestellten Ausführungsbeispiels, die den Komponenten aus **Fig.1** entsprechen, in **Fig.2** mit den gleichen Bezugszeichen wie in **Fig.1** versehen.

Nach Transformation der elektronischen Datei 107 von dem ersten Dateiformat in das zweite Dateiformat (Schritt 108) und der darauf folgenden Hashwert-Berechnung für die Datei in dem zweiten Dateiformat (Schritt 112) wird ein konkatenierter Hashwert unter Verwendung eines weiteren Hashwerts über weitere Größen (Schritt 201), gebildet (Schritt 202).

Die Bildung des konkatenierten Hashwerts erfolgt derart, daß der Hashwert über die Datei in dem zweiten Dateiformat mit im weiteren beschriebenen Größen konkateniert wird und über die Konkatenation eine Hashwertbildung erfolgt.

Die Größen sind:
a) mindestens eine Benutzergröße, die einen die Signaturen ausführenden Benutzer 108 charakterisiert, und/oder
b) mindestens eine Transformationsgröße, die das die Transformation durchführende Programm charakterisiert, und/oder
c) mindestens eine Größe, die das Programm charakterisiert, welches die Darstellung der Datei durchführt, und/oder
d) mindestens eine Größe, welche die Konfiguration des Programms charakterisiert, die Darstellung der Datei durchführt, und/oder
e) eine Rechnergröße, die den die Transformation durchführenden Rechner charakterisiert.

Ist für die Anzeigekomponente 104 eine Konfiguration eingestellt, welche sicherstellt, daß dem Benutzer tatsächlich die gesamte in der Datei enthaltene Information dargestellt wird, obwohl diese im ersten Dateiformat vorliegt, und wird diese Konfiguration in die Transformationssignatur mit aufgenommen, so kann das erste Dateiformat gleich dem zweiten Dateiformat sein. In diesem Fall entfällt der Schritt 112 und der in Schritt 202 gebildete konkatenierte Hashwert ist identisch zu dem in Schritt 201 gebildeten Hashwert.

Der konkatenierte Hashwert wird digital signiert (Schritt 203) und es wird eine erweiterte Transformationssignatur 204 in einer erweiterten Nachweisgröße 205 anstelle der Transformationssignatur 114 gespeichert.

Ferner sind in einer erweiterten Nachweisgröße 207 gemäß diesem Ausführungsbeispiel die oben beschriebenen Größen, die im Rahmen der Bildung des konkatenierten Hashwerts berücksichtigt worden sind, im weiteren als Konfigurationsdaten 206 bezeichnet, enthalten.

Die Konfigurationsdaten 206 können folgende Größen enthalten:
- eine Identifizierungsnummer des Benutzers,
- eine eindeutige Adresse des ersten Rechners, auf dem die Erstellung der erweiterten Nachweisgröße 207 durchgeführt worden ist,
- eine Versionsangabe und eine Angabe des Programms, mit dem das zweite Dateiformat verarbeitbar ist,
- Konfigurationsparameter des Programms, mit dem das zweite Dateiformat verarbeitbar ist, welche bei der Erstellung der Signatur eingestellt waren und die gewährleisten, daß die Darstellung der Daten bei Verwendung dieser Konfigurationsparameter für den Benutzer eindeutig ist,
- eine Datumsangabe und/oder Uhrzeitangabe, mit der angegeben ist, wann die erweiterte Nachweisgröße 207 erstellt worden ist,
- eine Angabe möglicher Vertragspartner.

Die erweiterte Nachweisgröße 207 wird an den zweiten Rechner wie bei dem Verfahren gemäß dem ersten Ausführungsbeispiel über das Kommunikationsnetz 120 übertragen.

Die erweiterte Transformationssignatur 204 wird mit dem zu dem geheimen Schlüssel, der zur digitalen Signierung verwendet wurde korrespondierenden öffentlichen Schlüssel entschlüsselt und es wird somit ein entschlüsselter konkatenierter Hashwert gebildet (Schritt 208).

Unter Verwendung der Konfigurationsdaten 206 wird in dem zweiten Rechner 150 die entsprechende Umgebung, beispielsweise die passende Version zur Darstellung des zweiten Dateiformats, oder die richtige Konfiguration des Programms, mit dem das zweite Dateiformat verarbeitbar ist, ausgewählt (Schritt 209) .

Unter Verwendung dieses Programms beziehungsweise dieser Rechnerumgebung, die durch die Konfigurationsdaten 206 charakterisiert wird, wird in einem weiteren Schritt 210 die elektronische Datei 107 von dem ersten Dateiformat in das zweite Dateiformat transformiert (Schritt 208).

Über die Datei in dem zweiten Dateiformat wird in einem weiteren Schritt (Schritt 211) ein Hashwert gebildet. Über die Konfigurationsdaten wird ebenfalls ein Hashwert gebildet (Schritt 212) .

Unter Verwendung der in den Schritten 211 und 212 gebildeten Hashwerte erfolgt durch Konkatenation der Hashwerte die Erstellung eines konkatenierten Hashwerts (Schritt 213).

Der in dem zweiten Rechner 150 erstellte konkatenierte Hashwert wird mit dem in Schritt 208 ermittelten entschlüsselten konkatenierten Hashwert, der aus der erweiterten Transformationssignatur 204, die in der erweiterten Nachweisgröße 207 enthalten ist, in einem Überprüfungsschritt (Schritt 214) verglichen.

Bei Gleichheit der konkatenierten Hashwerte, was einer erfolgreichen Verifikation der erweiterten Transformationssignatur 208 entspricht, ist der Nachweis erfolgt, daß die Darstellung mit identisch eingestellten Transformations- und Anzeigekomponenten, wie bei der Signaturerstellung erfolgt ist (Schritt 215).

Die weiteren Verifikationsschritte entsprechen denen, die im ersten Ausführungsbeispiel unter Beschreibung der Figur 1 dargestellt worden ist.

Im weiteren werden einige Alternativen zu dem oben dargestellten Ausführungsbeispiel erläutert:

Als Hash-Funktion kann im Rahmen der Erfindung jede beliebige Hash-Funktion, beispielsweise das Verfahren gemäß MD5, das Verfahren gemäß MD2, oder auch das Verfahren gemäß SHA-1 eingesetzt werden.

Das zweite Dateiformat kann sowohl ein Dateiformat zur Ausgabe der Datei auf einem Bildschirm (zum Beispiel PDF-Datei) als auch ein Dateiformat zur direkten Ausgabe der Datei auf einem Drucker (beispielsweise Postscript) sein.

Als Verfahren zur Bildung der digitalen Signatur kann jedes beliebige asymmetrische kryptographische Verfahren beispielsweise auch unter Einsatz elliptischer Kurven eingesetzt werden.

Im Rahmen dieses Dokuments wurden folgende Veröffentlichungen zitiert:
[1] C. Ruland, Informationssicherheit in Datennetzen, ISBN 3-89238-081-3, DATACOM-Verlag, S. 68 - 73, 1993
[2] A. J. Menezes, P. van Oorschot and S. Vanstone, Handbook of Applied Cryptography, CRC Press, ISBN 0-8493-8523-7, 1997
[3] WO97/12460 A

## Patentansprüche

1. Verfahren zur Bildung einer Nachweisgröße, die einen Nachweis eines digitalen Signierens einer elektronischen Datei, die in einem ersten Dateiformat vorliegt, ermöglicht, durch einen Rechner,
a) bei dem die Datei in ein zweites Dateiformat transformiert wird,
b) bei dem eine erste Dateisignatur abhängig von der Datei in dem ersten Dateiformat gebildet wird,
c) bei dem eine erste Transformationssignatur abhängig von der Datei in dem zweiten Dateiformat gebildet wird, und
d) bei dem die Nachweisgröße die Datei in dem ersten Dateiformat, die erste Dateisignatur sowie die erste Transformationssignatur umfasst,
wobei zur Bildung der digitalen Signaturen ein Verfahren nach dem Prinzip der asymmetrischen Verschlüsselung verwendet wird.

2. Verfahren nach Anspruch 1,
bei dem bei der Bildung der ersten Transformationssignatur eine weitere Benutzergröße, die einen die Signaturen ausführenden Benutzer charakterisiert, berücksichtigt wird.

3. Verfahren nach einem der vorangehenden Ansprüche,
bei dem bei der Bildung der ersten Transformationssignatur mindestens eine weitere Transformationsgröße, die das die Transformation und/oder das eine Darstellung durchführende Programm charakterisiert, berücksichtigt wird.

4. Verfahren nach einem der vorhergehenden Ansprüche,
bei dem bei der Bildung der ersten Transformationssignatur mindestens eine weitere Rechnergröße, die den die Transformation und/oder die den eine Darstellung durchführenden Rechner charakterisiert, berücksichtigt wird.

5. Verwendung der Nachweisgröße bestimmt nach einem der Ansprüche 1 bis 4 zum Nachweis, dass eine elektronische Datei, die in einem ersten Dateiformat vorliegt, digital signiert worden ist, wobei
a) unter Verwendung der Datei in dem ersten Dateiformat die erste Dateisignatur verifiziert wird,
b) die Datei in dem ersten Dateiformat in ein zweites Dateiformat transformiert wird,
c) unter Verwendung der Datei in dem zweiten Dateiformat die erste Transformationssignatur verifiziert wird,
d) bei negativer Verifikation ein Signal generiert wird, mit dem angezeigt wird, dass die Datei in dem ersten Dateiformat nicht digital signiert worden ist oder modifiziert worden ist
e) bei positiver Verifikation der ersten Dateisignatur und der ersten Transformationssignatur der Nachweis erbracht worden ist, dass die Datei in dem ersten Dateiformat digital signiert worden ist, und
f) zur Bildung der digitalen Signaturen ein Verfahren nach dem Prinzip der asymmetrischen Verschlüsselung verwendet wird.

6. Vorrichtung mit einem Prozessor, der derart eingerichtet ist, dass zur Bildung einer Nachweisgröße, die einen Nachweis eines digitalen Signierens einer elektronischen Datei, die in einem ersten Dateiformat vorliegt, ermöglicht, folgende Schritte durchgeführt werden:
a) Die Datei wird in ein zweites Dateiformat transformiert,
b) eine erste Dateisignatur wird abhängig von der Datei in dem ersten Dateiformat gebildet,
c) eine erste Transformationssignatur wird abhängig von der Datei in dem zweiten Dateiformat gebildet und
d) die Nachweisgröße umfasst die Datei in dem ersten Dateiformat, die erste Dateisignatur sowie die erste Transformationssignatur,
wobei der Prozessor derart eingerichtet ist, dass zur Bildung der digitalen Signaturen ein Verfahren nach dem Prinzip der asymmetrischen verschlüsselung verwendet wird.

## Claims

1. Method for forming a proof variable, which allows proof of a digital signing of an electronic file which is present in a first file format, by a computer:
a) in which the file is transformed into a second file format,
b) in which a first file signature is formed depending on the file in the first file format,
c) in which a first transformation signature is formed depending on the file in the second file format, and
d) in which the proof variable comprises the file in the first file format, the first file signature and also the first transformation signature,
with a method according to the principle of asymmetric encryption being used to form the digital signatures.

2. Method in accordance with claim 1,
in which a further user variable which characterizes the user providing the signatures is used for the formation of the first transformation signature.

3. Method in accordance with one of the previous claims,
in which at least one further transformation signature which characterizes the program executing the transformation and/or the presentation is taken into account in the formation of the first transformation signature.

4. Method in accordance with one of the previous claims.
in which at least one further computing variable which characterizes the transformation and/or the computer executing the presentation is taken into account for formation of the first transformation signature.

5. Use of the prove variable determined by one of the claims 1 through 4 to prove that an electronic file,
which is present in a first file format has been digitally signed, in which case
a) the first false signature is verified using the file in the first file format,
b) the file in the first file format is transformed into the second file format,
c) the first transformation signature is verified using the file in the second file format,
d) with a negative verification a signal is generated which is used to indicate that the file in the first file format has not been digitally signed or has been modified.
e) with a positive verification of the first file signature and of the first transformation signature, the proof is provided that the file in a first file format has been digitally signed, and
f)a procedure in accordance with the principle of asymmetric encryption is used for forming the digital signatures.

6. Device with a processor which is configured so that, to form a proof variable which provides proof of the digital signing of an electronic file which is present in a first file format, the following steps are executed:
a) The file is transformed into a second file format,
b) A first file signature is formed depending on the file in the first file format,
c) A first transformation signature is formed depending on the file in the second file format and
d) The proof variable comprises the file in the first file format, the first file signature and also the first transformation signature,
with the processor being configured such that a method in accordance with the principle of asymmetrical encryption is used for forming the digital signatures.

## Revendications

1. Procédé pour former une grandeur de preuve qui permet de prouver une signature numérique d'un fichier électronique qui est disponible dans un premier format de fichier, au moyen d'un ordinateur
a) dans lequel le fichier est transformé en un deuxième format de fichier,
a) dans lequel une première signature de fichier est formée en fonction du fichier dans le premier format de fichier,
b) dans lequel une première signature de transformation est formée en fonction du fichier dans le deuxième format de fichier, et
c) dans lequel la grandeur de preuve comprend le fichier dans le premier format de fichier, la première signature de fichier ainsi que la première signature de transformation,
un procédé selon le principe du codage asymétrique étant utilisé pour former les signatures numériques.

2. Procédé selon la revendication 1,
dans lequel, lors de la formation de la première signature de transformation, une grandeur d'utilisateur supplémentaire, qui caractérise un utilisateur exécutant les signatures, est prise en compte.

3. Procédé selon l'une quelconque des revendications précédentes,
dans lequel, lors de la formation de la première signature de transformation, au moins une grandeur de transformation supplémentaire, qui caractérise le programme exécutant la transformation et/ou le programme exécutant une représentation, est prise en compte.

4. Procédé selon l'une quelconque des revendications précédentes,
dans lequel, lors de la formation de la première signature de transformation, au moins une grandeur d'ordinateur supplémentaire, qui caractérise l'ordinateur exécutant la transformation et/ou qui caractérise l'ordinateur exécutant une représentation, est prise en compte.

5. Utilisation de la grandeur de preuve déterminée selon l'une quelconque des revendications 1 à 4 pour prouver qu'un fichier électronique, qui est disponible dans un premier format de fichier, a été signé numériquement,
a) la première signature de fichier étant vérifiée en utilisant le fichier dans le premier format de fichier,
b) le fichier dans le premier format de fichier étant transformé en un deuxième format de fichier,
c) la première signature de transformation étant vérifiée en utilisant le fichier dans le deuxième format de fichier,
d) un signal étant généré en cas de vérification négative, au moyen duquel il est affiché que le fichier dans le premier format de fichier n'a pas été signé numériquement ou qu'il a été modifié,
e) la preuve ayant été apportée, en cas de vérification positive de la première signature de fichier et de la première signature de transformation, que le fichier dans le premier format de fichier a été signé numériquement et
f) un procédé selon le principe du codage asymétrique étant utilisé pour former les signatures numériques.

6. Dispositif comprenant un processeur qui est configuré de telle manière que, pour former une grandeur de preuve, qui permet de prouver une signature numérique d'un fichier électronique qui est disponible dans un premier format de fichier, les étapes suivantes sont exécutées :
a) le fichier est transformé en un deuxième format de fichier,
b) une première signature de fichier est formée en fonction du fichier dans le premier format de fichier,
c) une première signature de transformation est formée en fonction du fichier dans le deuxième format de fichier et
d) la grandeur de preuve comprend le fichier dans le premier format de fichier, la première signature de fichier ainsi que la première signature de transformation,
le processeur étant configuré de telle manière qu'un procédé selon le principe du codage asymétrique est utilisé pour former les signatures numériques.
